# EUROPEAN PATENT SPECIFICATION

(11) **EP 0 464 279 B1**
(45) Date of publication and mention of the grant of the patent: **28.02.1996**
(21) Application number: 90307285.8
(22) Date of filing: 03.07.1990
(51) Int. Cl.: C09K 3/10, C08F 299/02

(54) **Automotive sealing process**
In Fahrzeugbau anwendbares Dichtungssystem
Procédé d'étanchéité utilisable pour la production d'automobiles

(43) Date of publication of application: 08.01.1992
(73) Proprietor: CRODA INTERNATIONAL plc, Goole North Humberside DN14 9AA (GB)
(72) Inventor: O'Sullivan, David Francis, Scrooby Nottinghamshire DN10 6AE (GB)
(74) Representative: Wain, Christopher Paul

(56) References cited:
- EP-A- 0 235 704
- DE-A- 3 233 837
- US-A- 4 085 018
- WORLD PATENT INDEX, accession no. 78-23117A [12], Derwent Publications Ltd,LOndon, GB; & SU-A-390 496 (UKR POLYGRAPH IND.)
- JAPANESE PATENT OFFICE, Tokyo, Japan, FILE SUPPLIER JAPS;& JP-A-63 057 623 (MITSUI TOATSU CHEM. INC.)

## Description

The invention relates to coating processes, in particular to automotive underbody and panel sealing utilizing radiation curable sealant compositions.

Coating systems used in the automotive industry at present include, solvent based bitumen underseals (such as those marketed in the UK as 'Supra Deadseal', Supra Ltd, Warley) and heat cured polyvinylchloride plastisol types (marketed by Croda Application Chemicals as 'Crodapol'). Other systems may be employed which utilise moisture curing urethane prepolymers in one and two part compositions, and heat curable polyurethane sealants may be formulated from suitable blocked isocyanates). Hot-melt sealants are also known to the art, formulated from blends of thermoplastic polymers.

The most common commercial system is the application of PVC plastisol sealer, however. These coatings are applied to the underbody and panel sections of automobiles and then cured in ovens at temperatures in excess of 100 Deg.C. for periods of up to 2 hours. These coatings provide anti-chip protection and rust-proofing for the expected life of the automobile.

The present invention relates to a coating system which, by the use of suitably reactive compositions, may yield underbody coatings having very rapid and controlled cure conditions utilising exposure to high intensity UV radiation.

UV curing compositions are widely used in the print and packaging industry as inks and varnishes and also in the electronics industry as protective coatings for optical fibres, as coatings for printed circuit boards (photoresists), and as sealants for the encapsulation of electronic components.

We have now found that certain blends of unsaturated oligomers, monomers, reactive and non-reactive diluents, and photoiniators are suitable for application to automobile bodies for the purpose of sealing and protecting underbody and seam areas from abrasion and chipping, functioning also as a barrier to moisture and corrosion inducing agents. The cured coatings also provide a degree of resistance to organic media such as petrol and engine oils.

According to the present invention there is provided a method of forming a protective coating on a surface of a vehicle body, which method comprises applying to the surface a coating of a composition comprising:
a) a reactive oligomer comprising an unsaturated polyester, polyester acrylate, chlorinated polyester, epoxy acrylate, epoxy acrylate modified by incorporation of vinyl and hydroxy functional rubbers, urethane acrylate or straight acrylic oligomer, or any mixture of two or more thereof;
b) a reactive monomer comprising an acrylic acid ester, methacrylic acid ester, maleic or fumaric acid ester, vinyl ester, vinyl aromatic hydrocarbon, vinyl heterocyclic compound or alkyl reactive compound, or any mixture of two or more thereof; and
c) a photoinitiator;
   and exposing the coating to UV radiation to cure it so as to form the protective coating.

The coating composition may comprise the following:- a) A reactive oligomer component based upon solely or blends of, unsaturated polyesters (UP), for example those derived from reaction of unsaturated diacids, such as maleic and fumaric acids, or diols, giving liquid compounds of molecular weight (Mn) of up to 3000 and acid numbers ranged from 20 - 35 mgKOH/g; polyester acrylates (PA) derived from acrylation of hydroxy functional polyester polymers, of molecular weight up to 8000 and glass transition temperatures from -10 Deg.C. to - 50 Deg.C.; chlorinated polyesters (CP) such as those described in US Patent 4134811 (De Poortere et al), which lists a series of suitable routes through to halogenated oligomeric esters; epoxy acrylates (EA), for instance, those based upon aromatic, aliphatic epoxies or epoxy novolaks, and those epoxy acrylates modified by incorporation of carboxy, vinyl,and hydroxy functional, acrylonitrile-butadiene copolymers. For instance,Ariga (US Patent 4085018) describes the modification of epoxy acrylates by incorporation of carboxy terminated polybutadiene-acrylonitrile rubbers. Useful epoxy acrylates and derivatives have a molecular weight of up to 1,500 ie 500 - 1,500, a functionality of 2 ie 1.7 - 2.3 reactive sites/molecule, and viscosity in the range 4000 to 30,000 MPa; urethane acrylates (UA), which are notionally obtained by reaction of a polyol and polyisocyanate to form oligomeric intermediates possessing an excess of hydroxy or isocyanate groups. Normally this oligomeric species is then further reacted with an α, β, ethylenically unsaturated compound having a group which is reactive with the isocyanate ie a hydroxy ester of acrylic acid or derivative.

The urethane acrylate may be based upon either aromatic or aliphatic isocyanates. Aromatic isocyanates are typified by phenylene diisocyanates, toluene diisocyanates and bis (isocyanatoaryl) alkanes. Aliphatic types are exemplified by hexanethylene diisocyanates, bis (isocyanatomethyl) cyclohexanes, bis (isocyanato cycloalkyl) eg.isophorone diisocyanate (IPDI).

Generally, useful urethane acrylates will have a molecular weight (Mn) range of 1000 - 7000, functionality of about 2 ie 1.7 - 2.3 unsaturated groups per molecule, and a viscosity range between 5,000 and 100,000 MPa's. To maximise the durability of the system as a coating, aliphatic isocyanates are preferred as a starting point since these provide higher thermal and chemical stability. Straight acrylic (SA) oligomers may also be used as a component in the oligomer base of the coating and whilst these possess relatively low reactivity they can contribute improved adhesion onto various plastics such as EPDM, and polypropylene. Useful molecular weights are in the region 500 - 3000.

The oligomer provides the chemical backbone of the coating formulation and is selected for the contribution to speed of cure, viscosity, degree of shrinkage on curing, flexibility, abrasion resistance, and adhesion to the substrate. For these reasons, urethane acrylates are preferred and especially preferred are blends of urethane acrylates and polyester acrylates. We have found that UA's based upon aliphatic (IPDI) isocyanates with viscosities in the range 7,500 - 50,000 MPas are suitable with a preferred viscosity of about 45,000 MPas. The UA component preferably forms up to 60% e.g.10-60% and especially preferred at about 45% of the composition.

The polyester acrylate portion of the oligomer blend is a liquid saturated polyester possessing terminal acrylic groups. Preferred molecular weights are in the region 3000 to 8000 with glass transition temperatures (Tg) in the range -10 Deg. to -50 Deg.C. Especially preferred, however, are PA's with a nolecular weight of 3200 and a Tg of approximately -20 Deg.C.

The PA component preferably forms 5 - 40% and especially preferably about 10% of the coating composition.

b) A reactive monomer package is selected fron the following:- (used singly or in blends); esters of acrylic acid for instance, isobornyl acrylate, isodecyl acrylate, lauryl acrylate, stearyl acrylate, hexane diol diacrylate, triethylene glycol dincrylate, tetra ethylene glycol diacrylate, tripropylene glycol diacrylate, trimethylol propane triacrylate, pentaerythritol triacrylate pentaerythritol tetraacrylate; esters of methacrylic acid, for example, 1, 6 hexanediol dimethacrylate,triethylene glycol dimethacrylate, trimethylol propane trimethacrylate; maleic and fumaric esters; vinyl esters such as vinyl acetate; vinyl aromatic compounds such as styrene and vinyl toluene (4-methyl styrene); vinyl heterocyclic compounds such as N-vinyl pyrrolidone.

These monomers offer a range of viscosities when blended singly, or as combinations, with oligomers of the types aforementioned.

As well as the many chemical types available, acrylates and methacrylates are categorised on their functionality; mono-, di-, tri, and tetra functional monomers are available, depending upon the desired rate of cure, crosslink density and degree of shrinkage on curing. Preferred monomer types are monofunctional vinyl heterocyclic compounds such as N-vinyl pyrrolidone, or monofunctional acrylates such as octyl decyl acrylate and lauryl acrylate. Especially preferred however is N-vinyl pyrrolidone.

The N-vinyl pyrrolidone preferably forms 1-15% and most preferably about 8% of the coating composition.

c) Photoiniator

Photoiniators are required for free radical induced UV cure since the monomers used in the composition do not absorb UV light at a rate sufficient to generate the necessary reactive moieties. Many photoiniators are known to the art.

Compounds may be intermolecular hydrogen-abstractors such as benzophenone, benzil, Michlers ketone, thioxanthone or anthraquinone. Generally, however, these types are used in combination with tertiary amines.

Other photoiniators are those which undergo intramolecular splitting to yield the free radicals and these are typified by benzoin, dialkoxyacetophenones, acyloxine esters, benzyl ketals, hydroxyalkylphenones and halogenoketones.

Photoiniators of the intramolecular splitting type are preferred with 2-hydroxy-2 methyl -1-phenyl propane-1-one being one such compound. The photoiniator is added at 0.5-5% and preferably at 4% of the final composition.

d) Non-reactive additives.

The coating composition conveniently also contains further components selected from other polymers, adhesion promoters, diluents and modifiers.

Other polymers may be added which, although not taking part in the curing reaction, contribute to adhesion, flexibility and toughness of the cured film. In this respect, suitable resins may include: acrylic copolymers such as methylmethacrylate: butylmethacrylate resins, possessing an acid number of 5 - 30 and preferably 9, and softening point (ring and ball) of 80 - 170 Deg.C., preferably 15 - 165 Deg.C.; also ethlacrylate-methyl-methacrylate resins of acid number 5 - 30, preferably 6 - 7, with softening points (ring and ball) between 80 - 170 Deg.C. and preferably 130 - 140 Deg.C.

The level of non-reactive acrylate copolymer is conveniently 10 - 40% and preferably 19% of the coating composition.

Polyvinyl ether polymers may also be added which provide improved adhesion and flexibility. Suitable types are polyvinyl methyl-polyvinylisobutyl - and polyvinyl ethyl ethers.

The polyvinyl ethyl ether polymers are preferred and suitable types are those with K values (1% in tetrahydrofuran) of 10 - 70. Especially preferred is a vinyl ethyl ether polymer of K value 10 - 15 and glass temperature of -43 Deg.C.

The vinyl ether polymers are added at 2 - 10%, and preferably about 6% of the formulated coating.

To further enhance adhesion to the electrocoated steel and other substrates, it is often advantageous to incorporate low levels of epoxide resins. Suitable resins are solid bisphenol. A - epichlorohydrin types of low molecular weight (Mn) typically from 900 - 1500, low softening point in the range 50 - 100 Deg.C. and epoxy group content of between 1000 - 2500 mmol/kg. The preferred resin has a molecular weight of approximately 900, a softening point of 50-70 Deg.C. (Kofler) and epoxy group content of approximately 2100 mmol/kg.

The level of epoxide resin is between 0.5 and 3.0% and preferably 1.0% of the total formulation.

e) Other additives

The coating composition may also contain further components such as acrylated fatty acid esters based upon acrylated soya bean oil, acrylated linseed oil etc. These are added as reactive diluents to give adhesion and reduce viscosity. In this regard, acrylated soya bean oil is used. This may form 1 to 10% of the formulation but about 6% is preferred.

Adhesion promoters such as silanes are also possible components and these may be selected from the group; vinyl trimethoxy silane, trimethoxy silane, chloropropyl trimethoxy silane, amino alkyl methoxy silane, triamino silane, gamma methacryloxy-propyl trimethoxy-silane, N amino ethyl aminopropyl-trimethoxy-silane, gamma aminopropyl-triethoxy-silane. These may be used singly or in blends, depending upon the exact nature of the substrate. The preferred silane is N amino ethyl-amino-propyl-trimethoxy silane and this is added at 0.1-0.7%, preferably at 0.5% of the formulation.

In some circumstances is may be convenient to use the silane as a primer, applied directly to the substrate as 0.1%, solution in isopropanol. This has been found to be most effective with medium to high build electrocoated steel.

To increase the hardness and impact resistance of the cured film as well as modifying the flow characteristics of the applied coating, it is desirable to add mineral fillers and extenders. Since these may block the effect of the cure radiation, UV transparent grades are selected. We have found that silica, talcum, mica, and magnesium oxide are suitable for this purpose.

These are added at up to 10% of the formulation i.e. 1-10% and preferably at about 3% of the total.

The invention is best understood by reference to the examples I to VI. In all cases, the coatings were evaluated for
- i abrasion resistance: - SAE-J-400 gravelometer, 5 cycles 750g gravel, 70 psi. Rating fron 0 - 10 (10 is untested panel).
- ii hot salt spray corrosion test: - ASTM B117, 168 hours, extent of delamination from cross scribe in mm.
- iii flexibility: - Croda test method, 90 Deg. around a 20 mm mandrel at 25 Deg.C.
- iv pick adhesion: - manual removal fron E'coat panel following cure schedule +24 hours at ambient.
- v cure speed: - 400 microns (wet) cured under Primare 'Minicure' unit, dual 300w/ inch lamps.

Tests 1 to 4 and 6 were conducted on formulations applied to electrocoated steel panels (PPG ED4E electrocoat, 180 Deg.C./9.14m (30') bake), at a wet film thickness of 400 micrometres (microns). Coatings were cured using a laboratory Primarc "Minicure" unit (Slough, UK) using dual 300w/2.54cm (1 inch) lamps at a belt speed of 5 meters/min. Panels were equilibrated at 25 Deg.C. for 24 hours before test.

**Table 1**

| Results | | | | | | | |
|---|---|---|---|---|---|---|---|
| Formulation | | | | | | | |
| | | I | II | III | IV | V | VI |
| i | Abrasion resist/rating | 7 | 7 | 6 | 7-8 | 6 | 5 |
| ii | Hot salt spray/mm | <1 | 2 | 4 | 2.5 | <1 | <1 |
| iii | Flexibility | pass | pass | pass | pass | pass | fail |
| iv | Pick adhesion | high | high | med | med | m-h | high |
| v | Cure speed/m per min | 6.5 | 6.5 | 5.5 | 7.0 | 5.0 | 9.0 |
| vi | Oil resistance/rating/10 | 8 | 8 | 6 | 7 | 5 | 8 |

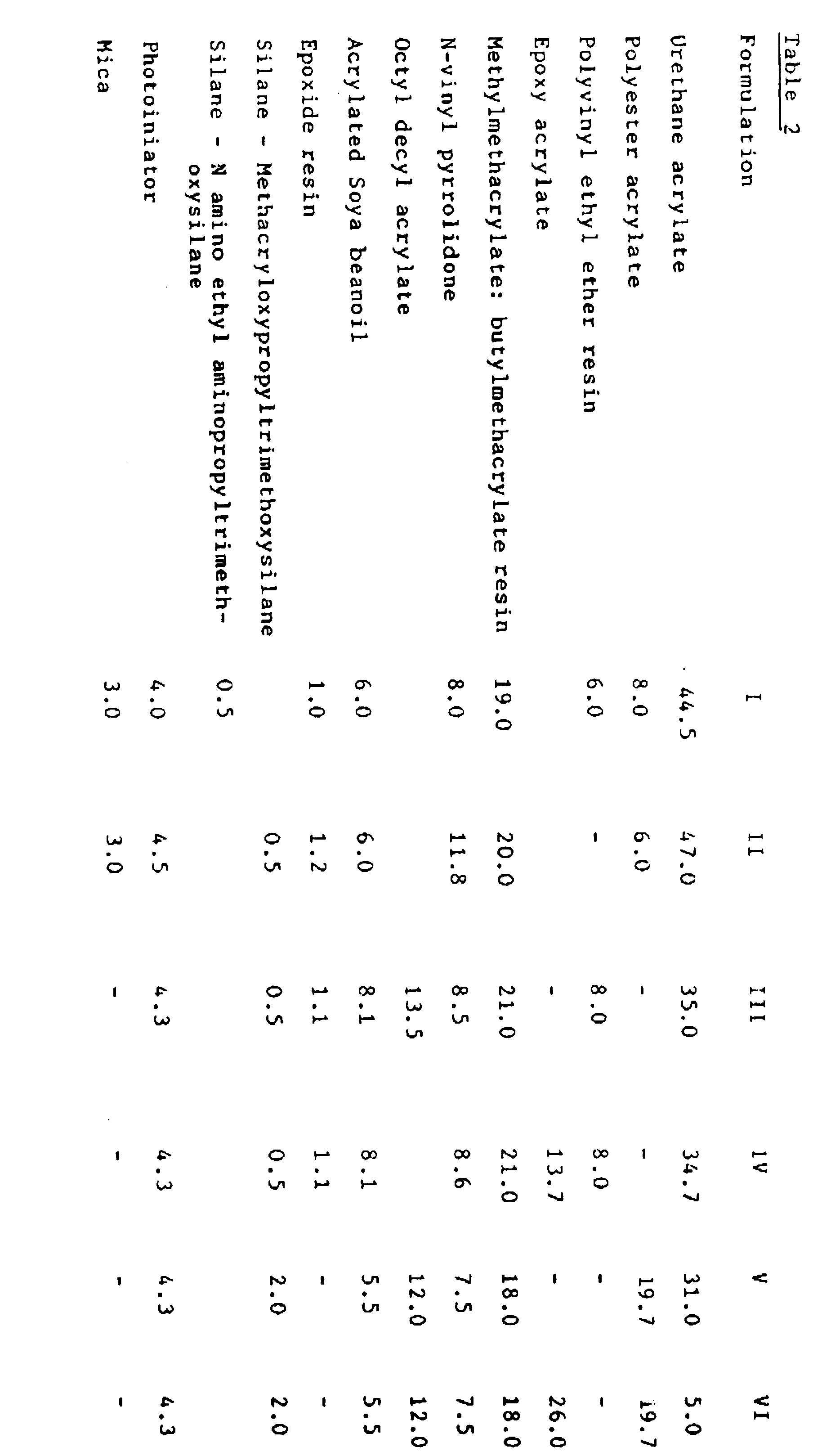

### Example I

This formulation performed well on abrasion and corrosion testing due to the high adhesion and toughness of the urethane acrylate.

### Example II

Attempts to lower the application viscosity by increasing the level of N-vinyl pyrrolidone worsened corrosion resistance due,in part,to the higher water sensitivity of this monomer. An increase in the photoiniator level also had little effect on increasing cure speed.

### Example III

In this case, increased monomer content (octyl decyl acrylate) was attempted to lower viscosity, replacing the polyester acrylate and mica filler. The effect of this was to only marginally reducc abrasion resistance but to lower corrosion and oil resistance somewhat.

### Example IV

A blend of urethane acrylate and epoxy acrylate was evaluated as a means of improving abrasion resistance.

The abrasion resistance did improve but at the possible expense of corrosion resistance and adhesion, probably due to the higher degree of shrinkage associated with he epoxy acrylate.

### Example V

An increased level of polyester acrylate was evaluated in Example V to monitor the effect on adhesion and abrasion resistance (the polyester acrylate is relatively slow curing but notionally provides good wetting and adhesion). The higher levels of polyester acrylate however, reduced the cohesiveness of the film and caused a marked reduction in cure speed. Oil resistance was also lowered, probably due to the reduced level of crosslinking and chain extension in the matrix.

### Example VI

In this case a blend of a relatively fast curing epoxy acrylate and the polyester acrylate was tried to offset the poor cohesion observed in Example V.

Once again, however, the epoxy acrylate caused a reduction in abrasion resistance and in this case a marginal failure was also recorded in the flexibility test. Notably the cure speed was improved disproportionately and this was observed in other blends with the polyester acrylate; a compatibility factor is suggested as a cause.

In accordance with the present invention, the above-described coating is applied to the surface of a vehicle body.

Preferably, the coating is applied to the underbody and seam areas of an automobile at a stage between electrocoating and primer surfacer application.

The coating may also be applied to substrates other than electrocoated steel and the compositions give high adhesion and flexibility on various polymeric materials allowing utilisation on plastic-body panels.

The rheology of the coating is such that spray application to the underside is possible with no dripping or sagging at film thickness between 50 and 1500 micrometers (microns). Preferred application is by conventional airless and air-airless spray techniques which are well known to the art and are used for the conventional plastisol and bitumen sealers. In this respect, manufacturers such as Graco UK of Wolverhampton, Binks Bullows of Brownhills, Walsall, UK and ARO Corporation of Redditch, Worcestershire, UK market suitable spray units and ancillary equipment.

The application of the coating also lends itself particularly well to robotic automation with the benefits of improved accuracy and precision of the coating operation.

Such a system may also be designed to self diagnose faults so that stoppage time is minimised in the case of poor alignment of the car body with the spray beads, or mismatch of automobile shells with the programmed spray parameters.

In the preferred system for underbody sealing car bodies are positioned over a series of spray jets which move across and along the car assembly at a rate consistent with the desired film thickness of the coating. The spray fans are also controlled to optimise coverage and penetration into recesses etc., in the body shell.

Whilst this is possible to effect manually, an automated system is preferred with adequate provision made for computer monitoring of the process regarding alignment and body-matching, spray blockages etc.

The cure process is achieved using high-powered UV radiation. In this system this may be envisaged as a set of UV lamps and reflectors set directly underneath the car body which in turn may be passed over the UV source at a rate consistent with the required degree of cure, or the car body may be held for a period with a mobile UV source scanning the underbody and seam areas and therefore curing the coating along the length of the car. It is also possible to combine the two systems so that the car body and the lamp array are both dynamic in operation.

To ensure adequate cure in shadowed and inaccessible areas of the underbody, it will be necessary to ensure that a series of lamps are focussed to optimise the extent of cure. This may be achieved by fixed focus lamps operating on an on/off or shutter system or by lamps with variable focus control which are capable of curing in a moving array i.e. the 'scan' mode.

Cure of inaccessible seam areas may be achieved by use of hand-held cure units, suitably shielded for operator safety, or or by an automated cure device mounted on a robot arm. This latter process may be integrated with the application of sealer sealer such that the application and cure of sealer are one operation i.e. applicator nozzle and cure electrode on a single robot arm.

The total cure system may also be automated with failsafe devices to prevent over-or under cure due to line stoppages or mismatch, misalignment of automobile bodies with the control cure parameters.

The preferred system is a two stage process with a static UV source and variable focus control enabling efficient cure of coatings on car underbodies passed over the source at a controlled rate. Also preferred is a microprocessor control system which determines the lamp mode (on/off), the focus and intensity of the cure radiation. This system would also control at which car bodies passed over the light source with additional safeguards to prevent over or under cure due to factors previously stated.

The cure of seam areas inaccessible to the underbody cure radiation would be achieved by an integrated application/cure mode, whereby the nozzle dispenser and cure electrode are fitted to a single robot arm, controlled by a microprocessor system as in the underbody application/cure.

The UV cure system of the present invention offers several advantages over the presently used underbody seal system. The UV system allows very rapid and controlled cure, e.g. in seconds. Because the free radical reactions are induced by radiation, the cure is obtained at ambient temperatures with attendant benefits of energy and space saving. Thus, for example the ovens used in PVC plastisol sealer curing are no longer needed. Moreover, since the coating formulations are solvent-free, there is a reduced requirement for heavy duty extraction equipment. This too reduces the space requirement over conventional air-dry and stoved underbody sealers, as well as minimising the health and safety risk of fire and explosion from volatile solvents. Atmospheric emissions are thus reduced and this is desirable in the control of air-borne pollutants from automotive plants, to aid compliance with revised environmental legislation.

A further feature of this UV cured system is that it will eliminate the costly and time-consuming incidence of damaged paint films owing to the condensation of plasticisers from the stoving of PVC plastisol coatings.

## Claims

1. A method of forming a protective coating on a surface of a vehicle body, which method comprises applying to the surface a coating of a composition comprising:
a) a reactive oligomer comprising an unsaturated polyester, polyester acrylate, chlorinated polyester, epoxy acrylate, epoxy acrylate modified by incorporation of vinyl and hydroxy functional rubbers, urethane acrylate or straight acrylic oligomer, or any mixture of two or more thereof;
b) a reactive monomer comprising an acrylic acid ester, methacrylic acid ester, maleic or fumaric acid ester, vinyl ester, vinyl aromatic hydrocarbon, vinyl heteracyclic compound or alkyl reactive compound, or any mixture of two or more thereof; and
c) a photoinitiator; and exposing the coating to UV radiation to cure it so as to form the protective coating.
and exposing the coating to UV radiation to cure it so as to form the protective coating.

2. A method according to claim 1, wherein the coating is applied by spraying.

3. A method according to claim 1 or 2, wherein component a) of the composition comprises urethane acrylate and/or polyester acrylate.

4. A method according to claim 3, wherein component a) of the composition comprises urethane acrylate in an amount from 10 to 60% by weight of the composition, and polyester acrylate in an amount from 1 to 10% by weight of the composition.

5. A method according to any of claims 1 to 4, wherein component b) of the composition comprises a monofunctional vinyl heterocyclic compound or a monofunctional acrylate, or a mixture of two or more thereof.

6. A method according to claim 4, wherein component b) of the composition comprises N-vinyl pyrrolidone.

7. A method according to any of claims 1 to 6, wherein the amount of component b) in the composition is from 1 to 10% by weight of the composition.

8. A method according to any of claims 1 to 7, wherein the photoinitiator in the composition is of the intramolecular splitting type.

9. A method according to any of claims 1 to 8, wherein the composition further includes a non-reactive polymer, an adhesion promoter, a diluent or modifier, or any two or more thereof.

## Patentansprüche

1. Methode zur Bildung einer Schutzschicht auf der Oberfläche einer Fahrzeugkarosserie, wobei die Methode darin besteht, daß auf die Oberfläche eine Beschichtung aufgebracht wird, deren Zusammensetzung:
a) ein reaktionsfähiges Oligomer, welches einen ungesättigten Polyester, ein Polyesteracrylat, einen chlorierten Polyester, ein Epoxyacrylat, ein durch den Einbau von Elastomeren mit funktionellen Vinyl- und Hydroxygruppen modifiziertes Epoxyacrylat, Urethanacrylat oder geradkettiges Acryloligomer oder eine Mischung von zwei oder mehr derselben enthält,
b) ein reaktionsfähiges Monomer, welches einen Acrylsäureester, Methacrylsäureester, Malein- oder Fumarsäureester, Vinylester, aromatischen Kohlenwasserstoff mit Vinylgruppe, eine heterocyclische Verbindung mit Vinylgruppe oder eine Verbindung mit reaktiver Alkylgruppe, oder eine Mischung von zwei oder mehr derselben enthält, und
c) einen Photoinitiator umfaßt,
und die Beschichtung UV-Strahlung ausgesetzt wird zur Aushärtung derselben unter Bildung einer Schutzschicht.

2. Methode nach Anspruch 1, wobei die Beschichtung durch Spritzen aufgebracht wird.

3. Methode nach Anspruch 1 oder 2, wobei der Bestandteil a) der Zusammensetzung Urethanacrylat und/oder Polyesteracrylat enthält.

4. Methode nach Anspruch 3, wobei der Bestandteil a) der Zusammensetzung Urethanacrylat in einer Menge von 10 bis 60 Gew.-% der Zusammensetzung und Polyesteracrylat in einer Menge von 1 bis 10 Gew.-% der Zusammensetzung enthält.

5. Methode nach einem der Ansprüche 1 bis 4, wobei der Bestandteil b) der Zusammensetzung eine heterocyclische Verbindung mit monofunktioneller Vinylgruppe oder ein monofunktionelles Acrylat oder eine Mischung von zwei oder mehr derselben enthält.

6. Methode nach Anspruch 4, wobei der Bestandteil b) der Zusammensetzung N-Vinylpyrrolidon enthält.

7. Methode nach einem der Ansprüche 1 bis 6, wobei die Menge des Bestandteils b) der Zusammensetzung 1 bis 10 Gew.-% der Zusammensetzung beträgt.

8. Methode nach einem der Ansprüche 1 bis 7, wobei der Photoinitiator in der Zusammensetzung vom sich intramolekular aufspaltenden Typ ist.

9. Methode nach einem der Ansprüche 1 bis 8, wobei die Zusammensetzung des weiteren ein nicht reaktionsfähiges Polymer, einen Adhäsionsbeschleuniger, ein Verdünnungsmittel oder Modifikationsmittel oder zwei oder mehr derselben umfaßt.

## Revendications

1. Une méthode de formation d'un enduit protecteur sur une surface de caisse de véhicule, ladite méthode comportant l'application à la surface d'un enduit dont la composition inclut:
a) un oligomère réactif comportant un polyester non saturé, un acrylate de polyester, un polyester chloré, un acrylate époxyde, un acrylate époxyde modifié par l'incorporation de caoutchoucs fonctionnels vinyliques et hydroxyliques, un acrylate uréthanique ou un oligomère acrylique pur, ou un quelconque mélange de deux de ces éléments constitutifs ou davantage;
b) un monomère réactif comportant un ester d'acide acrylique, un ester d'acide méthacrylique, un ester d'acide maléique ou fumarique, un ester vinylique, un hydrocarbure aromatique vinylique, un composé hétérocyclique vinylique ou un composé réactif alkyle réactif, ou un quelconque mélange de deux de ces éléments constitutifs ou davantage; et
c) un photoinitiateur;
et l'exposition du revêtement à un rayonnement UV pour traiter cette composition de manière à former l'enduit protecteur.

2. Une méthode selon la revendication 1, dans laquelle l'enduit est appliqué par pulvérisation.

3. Une méthode selon la revendication 1 ou 2, dans laquelle le composant a) de la composition comporte de l'acrylate uréthanique et/ou de l'acrylate de polyester.

4. Une méthode selon la revendication 3, dans laquelle le composant a) de la composition comporte de l'acrylate uréthanique en quantités de 10 à 60% du poids de la composition, et de l'acrylate de polyester en quantités de 1 à 10% du poids de la composition.

5. Une méthode selon l'une quelconque des revendications 1 à 4, dans laquelle le composant b) de la composition comporte un composé hétérocyclique vinylique monofonctionnel ou un acrylate monofonctionnel, ou un mélange de deux de ces éléments ou davantage.

6. Une méthode selon la revendication 4, dans laquelle le composant b) de la composition comporte du N-vinyl-pyrrolidone.

7. Une méthode selon l'une quelconque des revendications 1 à 6, dans laquelle la quantité du composant b) dans la composition se situe entre 1 et 10% du poids de la composition.

8. Une méthode selon l'une quelconque des revendications 1 à 7, dans laquelle le photoinitiateur de la composition est du type à scission intramoléculaire.

9. Une méthode selon l'une quelconque des revendications 1 à 8, dans laquelle la composition contient par ailleurs un polymère non réactif, un promoteur d'adhésion, un diluant ou un agent de flottation, ou deux ou davantage des composants précités.
